## Europäisches Patentamt
## European Patent Office
## Office européen des brevets

(19)

(11) Numéro de publication: **0 109 956**
**B1**

(12) **FASCICULE DE BREVET EUROPEEN**

(45) Date de publication du fascicule du brevet: **02.09.87**

(21) Numéro de dépôt: **83870121.7**

(22) Date de dépôt: **17.11.83**

(51) Int. Cl.⁴: **F 16 L 55/07,** E 03 C 1/12,
F 16 K 24/06

(54) **Dispositif de valve à air automatique pour canalisations.**

(30) Priorité: **19.11.82 BE 209518**

(43) Date de publication de la demande:
**30.05.84 Bulletin 84/22**

(45) Mention de la délivrance du brevet:
**02.09.87 Bulletin 87/36**

(84) Etats contractants désignés:
**FR GB NL SE**

(56) Documents cités:
**FR-A-2 247 656**
**GB-A-2 029 937**
**GB-A-2 051 315**

(73) Titulaire: **Ericson, Sture**
**Prins Boudewijnlaan 48**
**B-2230 Schilde (BE)**

(72) Inventeur: **Ericson, Sture**
**Prins Boudewijnlaan 48**
**B-2230 Schilde (BE)**

(74) Mandataire: **Overath, Philippe et al**
**Cabinet Bede 13, Avenue Antoine Depage**
**B-1050 Bruxelles (BE)**

Courier Press, Leamington Spa, England.

EP 0 109 956 B1

# Description

La présente invention se rapporte à un dispositif de valve à air automatique pour conduites parcourues par un fluide tel que de l'air, de l'eau, etc. susceptible d'être soumise à une dépression et comprenant un corps tubulaire disposé verticalement dont le bord supérieur forme un siège pour un clapet annulaire qui repose d'autre part sur un siège extérieur concentrique au premier et qui fait partie d'un chapeau déterminant une chambre communiquant avec l'intérieur du corps tubulaire et donnant naissance en dessous du clapet à un canal d'introduction d'air.

Le clapet annulaire doit permettre à l'air ambiant ou atmosphérique d'entrer dans la chambre par soulèvement du clapet lorsqu'une dépression se produit dans la canalisation.

D'une manière générale, dans les dispositifs connus, le guidage du clapet se soulevant sous l'effet d'une entrée d'air extérieur est effectué à l'aide de moyens prévus à l'intérieur du corps de la valve et en général dans l'espace formé au-dessus du clapet, ce qui donne lieu à une limitation de la course du clapet et entraîne aussi une limitation de la quantité d'air introduite lors du soulèvement du clapet. De tels dispositifs sont décrits par exemple dans les brevets GB—A—2 051 315 et FR—A—2 247 656.

En outre ces moyens de guidage risquent d'être soumis à l'influence de l'air pollué et de l'eau.

La présente invention a pour but de remédier à ces inconvénients et consiste essentiellement en ce que le clapet annulaire est muni de moyens de guidage situés à l'extérieur de l'enceinte intérieure déterminée par le corps tubulaire, le chapeau et le clapet fermé et coopérant avec d'autres moyens prévus à l'extrérieur du corps tubulaire.

Dans la réalisation pratique de l'invention, le clapet porte des pattes de guidage munies d'une rainure intérieure coopérant avec des ailettes moulées à l'extérieur du corps de la valve.

Ci-après on décrira l'invention à l'aide des dessins ci-joints dans son application à:

A. Un dispositif pour canalisations sanitaires d'évacuation d'eaux usées.

La figure 1 est une vue en coupe verticale du dispositif.

La figure 1A est une coupe par la ligne A—A dans la figure 1.

La figure 2 est une vue en perspective illustrant le dispositif de guidage nouveau prévu suivant l'invention.

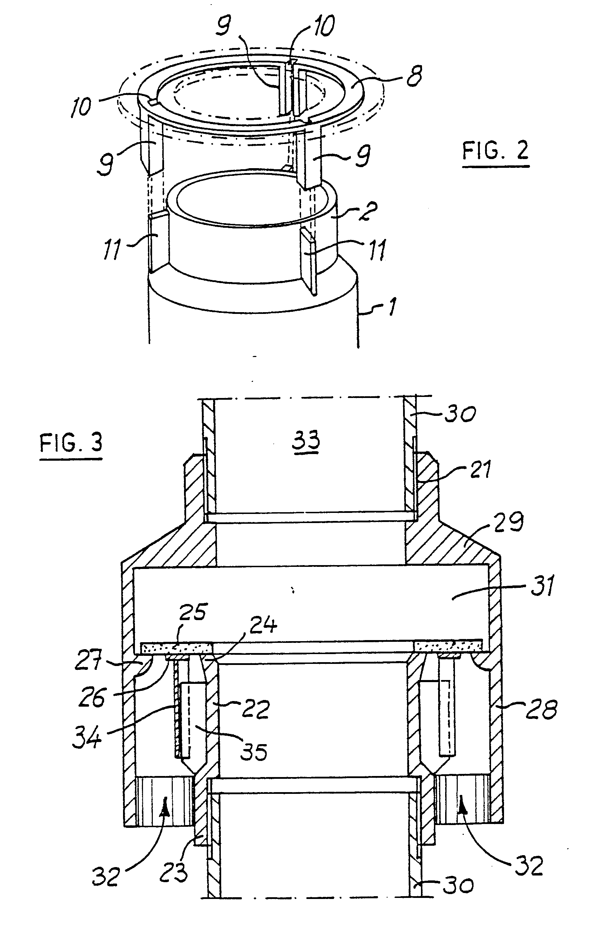

B. Un dispositif pour canalisation d'eau susceptible d'être soumise à dépression (figure 3).

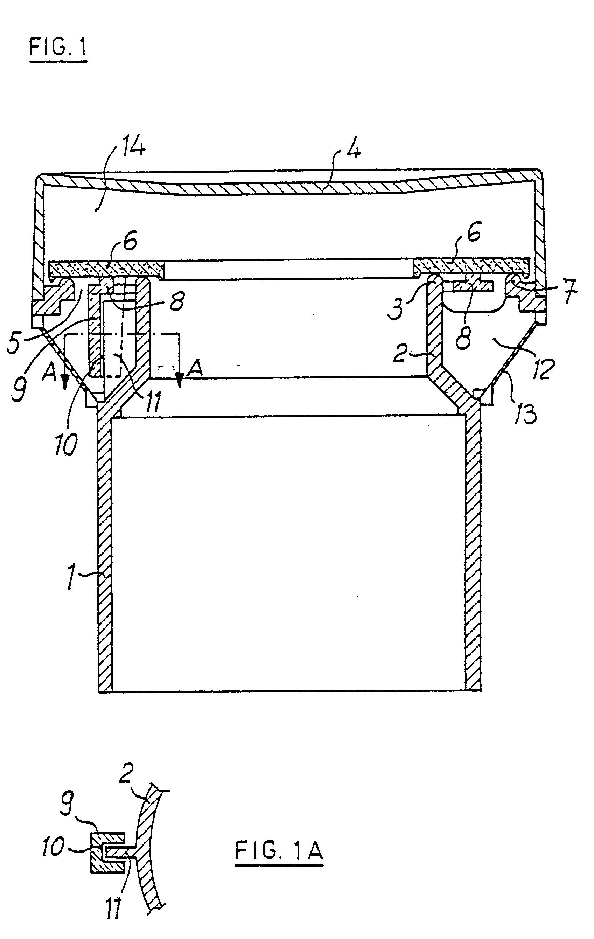

Sur la figure 1 des dessins ci-joints on a représenté en 1 le corps de valve relié à une canalisation de ventilation· (non représentée) et qui, dans l'exemple représenté, comprend à son extrémité supérieure un col tronconique 2 en forme de Venturi se terminant par une lèvre 3 et coopérant avec un couvercle 4 de manière à donner naissance à une entrée d'air périphérique 5 en formant un canal pouvant être obturé par une membrane ou un clapet annulaire 6; celui-ci, situé à l'extérieur du col tronconique, repose sur un siège intérieur formé par la lèvre 3 et sur un siège extérieur formé par une lèvre 7 prévue sur la périphérique interne du couvercle 4.

Le clapet annulaire 6 est muni d'un support annulaire 8 par exemple en un matériau plastique.

Conformément à l'invention ce support possède des pattes de guidage 9 dirigées vers le bas et munies d'une rainure intérieure 10 coopérant avec des ailettes 11 moulées à l'extérieur du corps 1 de valve (figure 2).

Des entretoises 12 sont prévues qui relient le siège extérieur 7 et le corps 1 de la valve.

Une caractéristique supplémentaire est qu'à l'entrée du canal annulaire est prévu un grillage 13 protégeant le clapet annulaire 6 contre l'introduction de corps étrangers et notamment d'insectes.

On comprend aisément qui grâce à l'invention, le clapet annulaire peut se déplacer suivant une course qui correspond à la hauteur entière de l'espace intérieur 14 du couvercle; de ce fait l'introduction d'une quantité d'air plus considérable que dans les dispositifs connus est assurée.

De plus du fait que le guidage du clapet 6 est prévu à l'extérieur du corps 1 de la valve, une protection contre les effets néfastes pouvant procurer de l'humidité, de la buée, des éclaboussures se manifestant à l'intérieur du corps de la valve est assurée.

Dans la réalisation selon la figure 3, le dispositif est appliqué à une conduite d'eau 33 et le dispositif représenté par cette figure est prévu entre deux raccords 21, 23 de liaison avec le toyau 30 de cette conduite. Du raccord 23 est solidaire le corps de la valve 22, lequel forme par son bord supérieur un siège 24 pour un clapet annulaire 25 muni d'un support 26 également annulaire et reposant d'autre part sur un siège 27 formé par un manchon extérieur 28 avec lequel fait corps un chapeau 29 comprenant le raccord 21 en donnant lieu à la formation d'une chambre 31 au-dessus du clapet annulaire 25.

Entre le manchon 28 et le corps tubulaire 22 est formée une entrée d'air 32.

Lorsque par exemple par suite d'une coupure dans l'arrivée d'eau une dépression se produit dans la canalisation 33 ainsi constituée, le clapet 25 est soulevé sous l'effet de la dépression et l'air ambiant ou atmosphérique pénètre dans la chambre 31 et dans la conduite 33 de manière à éliminer cette dépression.

Cette dépression dans la conduite principale peut avoir pour conséquence que de l'eau contaminée provenant d'un appareil sanitaire soit aspirée dans cette conduite.

Conformément à l'invention, le support 26 du clapet 25 porte des pattes de guidage 34 dirigées vers le bas et, comme dans le cas des figures 1, 1A et 2, munies d'une rainure intérieure coopérant avec des ailettes 35 moulées à l'extérieur du corps tubulaire 22.

**Revendications**

1. Dispositif de valve à air automatique pour canalisations parcourues par un fluide tel que de l'air, de l'eau, etc. susceptible d'être soumise à une dépression et comprenant un corps tubulaire (2, 22) disposé verticalement dont le bord supérieur (3, 24) forme un siège pour un clapet annulaire (6, 25) qui repose d'autre part sur un siège extérieur (7, 27) concentrique au premier et qui fait partie d'un chapeau (4, 29) déterminant une chambre (14, 31) communiquant avec l'intérieur du corps tubulaire et donnant naissance en dessous du clapet à un canal (5, 32) d'introduction d'air, caractérisé en ce que le clapet annulaire (6, 25) est muni de moyens de guidage (9, 34) situés à l'extérieur de l'enceinte intérieure déterminée par le corps tubulaire (2, 22), le chapeau (4, 29) et le clapet (6, 25) fermé et coopérant avec d'autres moyens (11, 35) prévus à l'extérieur du corps tubulaire (2, 22).

2. Dispositif suivant la revendication 1, caractérisé en ce que les moyens de guidage sont constitués par des pattes (9, 34) portées par le clapet (6, 25) ou par un support annulaire de celui-ci (8, 26) qui sont dirigées vers le bas et qui sont munies d'une rainure intérieure (10) coopérant avec des ailettes (11, 35) moulées à l'extérieur du corps (2, 22) de la valve.

3. Dispositif suivant la revendication 1, caractérisé en ce que, à l'entrée du canal (5, 32) d'introduction d'air est prévu un grillage (13) ou un élément analogue destiné à assurer une protection contre l'introduction de corps étrangers et notamment d'insectes.

4. Dispositif suivant la revendication 1, caractérisé en ce qu'il est utilisé dans une canalisation sanitaire d'évacuation d'eaux usées et destiné à permettre l'entrée d'air frais dans la canalisation lorsqu'une dépression se manifeste à l'intérieur de cette canalisation.

5. Dispositif suivant la revendication 1, caractérisé en ce qu'il est utilisé dans une canalisation d'eau et destiné à permettre une entrée d'air lorsqu'une dépression se manifeste à l'intérieur de la canalisation d'eau.

**Patentansprüche**

1. Automatik-Luftventil für Leitungen, die von einem Fluid, wie Luft, Wasser etc., durchströmt werden, die einem Unterdruck unterworfen werden können und einen rohrförmigen Körper (2; 22) aufweisen, der vertikal angeordnet ist und dessen oberer Rand (3; 24) einen Sitz für eine ringförmige Klappe (6; 25) bildet, die andererseits auf einem Aussensitz (7; 27) aufliegt, der konzentrisch zum ersten Sitz angeordnet ist und der Teil einer Kappe (4; 29) ist, die eine Kammer (14, 31) bildet, die mit dem Inneren des rohrförmigen Körpers in Verbindung steht und die unterhalb der Kappe einen Luftzufuhrkanal aufweist, dadurch gekennzeichnet, dass die ringförmige Klappe (6; 25) mit Führungseinrichtungen (9; 34) ausgestattet ist, die sich ausserhalb des Innenraums befinden, der durch den rohrförmigen Körper (2; 22), die Kappe (4; 29) und die geschlossene Klappe (6; 25) gebildet wird und die mit anderen Einrichtungen (11, 35) zusammenwirken, die ausserhalb des rohrförmigen Körpers (2; 22) vorgesehen sind.

2. Automatik-Luftventil nach Anspruch 1, dadurch gekennzeichnet, dass die Führungseinrichtungen durch Lappen (9; 34) gebildet werden, die von der Klappe (6; 25) oder deren ringförmigen Halter (8; 26) getragen werden und die nach unten gerichtet sind und eine Innennut (10) aufweisen, die mit Flügeln (11; 35) zusammenwirkt, die am Aussenumfang des Körpers (2; 22) des Ventils geformt sind.

3. Automatik-Luftventil nach Anspruch 1, dadurch gekennzeichnet, dass am Eingang des Luftzufuhrkanals (5; 32) ein Gitter (13) oder ein analoges Bauelement angeordnet ist, das einen Schutz gegen den Eintritt von Fremdkörpern und besonders Insekten bietet.

4. Automatik-Luftventil nach Anspruch 1, dadurch gekennzeichnet, dass es in einer Sanitärleitungsanlage zur Abführung von Gebrauchtwasser verwendet wird und dazu dient, den Zutritt von Frischluft in die Leitungsanlage zu gestatten, wenn im Inneren der Leitungsanlage ein Unterdruck auftritt.

5. Automatik-Luftventil nach Anspruch 1, dadurch gekennzeichnet, dass es in einer Leitungsanlage für Wasser verwendet wird und dazu dient, einen Lufteintritt zu gestatten, wenn im Inneren der Leitungsanlage für Wasser ein Unterdruck auftritt.

**Claims**

1. An automatic air-valve device for systems of pipes through which a fluid such as air, water, etc. flows, capable of being subjected to low pressure and comprising a vertically disposed tubular body (2, 22) whose upper edge (3, 24) forms a seat for an annular flap valve (6, 25) which also rests on an external seat (7, 27) concentric with the first and which forms part of a cap (4, 29) determining a chamber (14, 31) communicating with the interior of the tubular body and giving rise below the flap valve to an air inlet duct (5, 32), characterised in that the annular flap valve (6, 25) is equipped with guide means (9, 34) situated on the outside of the interior enclosure, determined by the tubular body (2, 22), the cap (4, 29), and the closed flap valve (6, 25), and cooperating with other means (11, 35) provided on the outside of the tubular body (2, 22).

2. A device according to claim 1, characterised in that the guide means consist of legs (9, 34) carried by the flap valve (6, 25) or by an annular support of the latter (8, 26) which are directed downwards and are equipped with an internal groove (10) which cooperates with fins (11, 35) moulded on the outside of the body (2, 22) of the valve.

3. A device according to claim 1, characterised in that, at the entrance of the air inlet duct (5, 32) a grid (13) or similar element is provided to ensure protection against the introduction of foreign bodies, in particular insects.

4. A device according to claim 1, characterised in that it is used in a sewage pipe system and is designed to allow fresh air to enter the pipe system when there is low pressure inside the system.

5. A device according to claim 1, characterised in that it is used in a water pipe system and is designed to allow air to enter when there is low pressure inside the system.

FIG. 1

FIG. 1A

FIG. 2

FIG. 3